# EUROPEAN PATENT APPLICATION

(11) **EP 4 432 394 A1**
(43) Date of publication of application: **18.09.2024**
(21) Application number: 23863501.5
(22) Date of filing: 06.09.2023
(51) Int. Cl.: H01M 4/36, H01M 4/38, H01M 4/48, H01M 4/58, H01M 4/62, H01M 4/13, H01M 4/02

(54) **NEGATIVE ELECTRODE ACTIVE MATERIAL, NEGATIVE ELECTRODE INCLUDING SAME, SECONDARY BATTERY INCLUDING SAME, AND METHOD FOR MANUFACTURING NEGATIVE ELECTRODE ACTIVE MATERIAL**

(30) Priority: 07.09.2022 KR 20220113645; 05.09.2023 KR 20230117434
(71) Applicant: LG Energy Solution, Ltd., Seoul 07335 (KR)
(72) Inventor: CHOI, Junghyun, Daejeon 34122 (KR); PARK, Semi, Daejeon 34122 (KR); PARK, Heeyeon, Daejeon 34122 (KR); SHIN, Sun Young, Daejeon 34122 (KR); OH, Ilgeun, Daejeon 34122 (KR); LEE, Yong Ju, Daejeon 34122 (KR)
(74) Representative: Hoffmann Eitle
(86) International application number: PCT/KR2023/013344
(87) International publication number: WO 2024/054035

(57) **Abstract**

The present invention relates to a negative electrode active material, a negative electrode including same, a secondary battery including same, and a method for manufacturing the negative electrode active material.

## Description

### TECHNICAL FIELD

The application claims priority to and the benefit of Korean Patent Application No. 10-2022-0113645 filed in the Korean Intellectual Property Office on September 7, 2022, and Korean Patent Application No.10-2023-0117434 filed in the Korean Intellectual Property Office on September 5, 2023.

The present invention relates to a negative electrode active material, a negative electrode including the same, a secondary battery including the same and a method for preparing a negative electrode active material.

### BACKGROUND ART

Recently, with the rapid spread of electronic devices using batteries such as mobile phones, notebook-sized computers, and electric vehicles, the demand for small and lightweight secondary batteries having relatively high capacity is rapidly increasing. In particular, lithium secondary batteries are lightweight and have high energy density, and thus have attracted attention as driving power sources for mobile devices. Accordingly, research and development efforts to improve the performance of lithium secondary batteries have been actively conducted.

In general, a lithium secondary battery includes a positive electrode, a negative electrode, a separator interposed between the positive electrode and the negative electrode, an electrolyte, an organic solvent and the like. Further, for the positive electrode and the negative electrode, an active material layer each including a positive electrode active material and a negative electrode active material may be formed on a current collector. In general, lithium-containing metal oxides such as LiCoO₂ and LiMn₂O₄ have been used as the positive electrode active material for the positive electrode, and lithium-free carbon-based active materials and silicon-based active materials have been used as the negative electrode active material for the negative electrode.

Among the negative electrode active materials, the silicon-based active material is attracting attention because the silicon based active material has a high capacity and excellent high-speed charging characteristics compared to the carbon-based active material. However, the silicon-based active material has a disadvantage in that the initial efficiency is low because the degree of volume expansion/contraction due to charging/discharging is large and the irreversible capacity is large.

Meanwhile, among the silicon-based active materials, a silicon-based oxide, specifically, a silicon-based oxide represented by SiOₓ (0<x<2) has an advantage in that the degree of volume expansion/contraction due to charging/discharging is low compared to other silicon-based active materials such as silicon (Si). However, the silicon-based oxide still has a disadvantage in that the initial efficiency is lowered depending on the presence of the irreversible capacity.

In this regard, studies have been continuously conducted to reduce irreversible capacity and improve initial efficiency by doping or intercalating a metal such as Li, Al, and Mg into silicon-based oxides. However, in the case of a negative electrode slurry including a metal-doped silicon-based oxide as a negative electrode active material, there is a problem in that the metal oxide formed by doping the metal reacts with moisture to increase the pH of the negative electrode slurry and change the viscosity thereof, and accordingly, there is a problem in that the state of the prepared negative electrode becomes poor and the charge/discharge efficiency of the negative electrode is reduced.

Accordingly, there is a need for the development of a negative electrode active material capable of improving the phase stability of a negative electrode slurry including a silicon-based oxide and improving the charge/discharge efficiency of a negative electrode prepared therefrom.

Korean Patent No. 10-0794192 relates to a method for preparing a carbon-coated silicon-graphite composite negative electrode material for a lithium secondary battery and a method for preparing a secondary battery including the same, but has a limitation in solving the above-described problems.

### [Related Art Document]

### [Patent Document]

(Patent Document 1) Korean Patent No. 10-0794192

### SUMMARY OF THE INVENTION

### Technical problem

The present invention has been made in an effort to provide a negative electrode active material, a negative electrode including the same, a secondary battery including the same and a method for preparing a negative electrode active material.

### Technical solution

An exemplary embodiment of the present invention provides a negative electrode active material including silicon-based particles including SiOₓ (0<x<2) and a Li compound, in which the Li compound includes at least one crystalline lithium silicate selected from the group consisting of crystalline Li₂SiO₃, crystalline Li₄SiO₄ and crystalline Li₂Si₂O₅, a content of the crystalline Li₂SiO₃ is higher than the sum of a content of the crystalline Li₂Si₂O₅ and a content of the crystalline Li₄SiO₄, the crystalline Li₂SiO₃ is included in an amount of 60 parts by weight or more based on total 100 parts by weight of crystalline lithium silicate, and a content of the crystalline phase present in the silicon-based particles is higher than a total content of the amorphous phase.

Another exemplary embodiment of the present invention provides a method for preparing the negative electrode active material according to an exemplary embodiment of the present invention, the method including: forming particles including a silicon-based oxide represented by SiOₓ (0<x<2); and mixing particles including the silicon-based oxide and a lithium precursor, and then heat-treating the resulting mixture.

Still another exemplary embodiment of the present invention provides a negative electrode including the negative electrode active material according to an exemplary embodiment of the present invention.

Yet another exemplary embodiment of the present invention provides a secondary battery including the negative electrode according to an exemplary embodiment of the present invention.

### Technical effect

Since the content of crystalline Li₂SiO₃ is predominantly high in the crystalline lithium silicate, the loss of discharge capacity per weight depending on an increase in Li content in the negative electrode active material of the present invention is small, and SiO₂ and Li, which act as irreversible capacity during Li doping, react in large amounts to form a lithium silicate structure of electrochemically stable Li₂SiO₃, so that the negative electrode active material of the present invention can significantly increase the initial efficiency. Further, crystalline Li₂SiO₃ has excellent service life characteristics because the structure is stable during charging and discharging.

For the negative electrode active material of the present invention, the total content of the crystalline phase is higher than the total content of the amorphous phase, and thus, the contents of lithium oxides and lithium silicates reacting with moisture are low, so that it is possible to prevent the gas generation and viscosity change of the negative electrode slurry and to improve the phase stability of a slurry including the negative electrode active material. Therefore, there is an effect that the qualities of a negative electrode including the negative electrode active material and a secondary battery including the negative electrode are enhanced and the charge/discharge capacity, initial efficiency, and/or service life characteristics thereof are improved.

### DETAILED DESCRIPTION

Hereinafter, the present specification will be described in more detail.

When one part "includes" one constituent element in the present specification, unless otherwise specifically described, this does not mean that another constituent element is excluded, but means that another constituent element may be further included.

When one member is disposed "on" another member in the present specification, this includes not only a case where the one member is brought into contact with another member, but also a case where still another member is present between the two members.

Terms or words used in the specification should not be interpreted as being limited to typical or dictionary meaning and should be interpreted with a meaning and a concept which conform to the technical spirit of the present invention based on the principle that an inventor can appropriately define a concept of a term in order to describe his/her own invention in the best way.

Singular expressions of the terms used in the present specification include plural expressions unless they have definitely opposite meanings in the context.

In the present specification, the crystallinity of a structure included in a negative electrode active material may be confirmed by X-ray diffraction analysis, the X-ray diffraction analysis may be performed using an X-ray diffraction (XRD) analyzer (trade name: D4-endavor, manufacturer: Bruker), and in addition to the apparatus, an apparatus used in the art may be appropriately employed.

In the present specification, the presence or absence of an element and the content of the element in a negative electrode active material can be confirmed by ICP analysis, and the ICP analysis may be performed using an inductively coupled plasma atomic emission spectrometer (ICPAES, Perkin Elmer 7300).

In the present specification, an average particle diameter (D₅₀) may be defined as a particle diameter corresponding to 50% of a cumulative volume in a particle size distribution curve (graph curve of the particle size distribution map) of the particles. The average particle diameter (D₅₀) may be measured using, for example, a laser diffraction method. The laser diffraction method can generally measure a particle diameter of from submicron region to about several mm, and results with high reproducibility and high resolution may be obtained.

Hereinafter, preferred exemplary embodiments of the present invention will be described in detail. However, the exemplary embodiments of the present invention may be modified into various other forms, and the scope of the present invention is not limited to the exemplary embodiments which will be described below.

### <Negative electrode active material>

Hereinafter, a negative electrode active material will be described in detail.

The present invention relates to a negative electrode active material, and more specifically, to a negative electrode active material for a lithium secondary battery.

An exemplary embodiment of the present invention provides a negative electrode active material including silicon-based particles including SiOₓ (0<x<2) and a Li compound, in which the Li compound includes at least one crystalline lithium silicate selected from the group consisting of crystalline Li₂SiO₃, crystalline Li₄SiO₄ and crystalline Li₂Si₂O₅, a content of the crystalline Li₂SiO₃ is higher than the sum of a content of the crystalline Li₂Si₂O₅ and a content of the crystalline Li₄SiO₄, the crystalline Li₂SiO₃ is included in an amount of 60 parts by weight or more based on total 100 parts by weight of crystalline lithium silicate, and a content of the crystalline phase present in the silicon-based particles is higher than a total content of the amorphous phase.

In a negative electrode active material including a silicon-based oxide in the related art, studies have been conducted to remove the irreversible capacity of the silicon-based oxide or increase the initial efficiency by doping or distributing lithium or the like to the negative electrode active material. However, since the content of the amorphous phase is high in such a negative electrode active material, there is a problem in that during the preparation of a negative electrode slurry, specifically an aqueous negative electrode slurry, reactions of moisture with lithium oxides and/or lithium silicates increase gas generation, increase the pH of the negative electrode slurry, and reduce the phase stability, so that there is a problem in that the quality of a prepared negative electrode is poor and the charge/discharge efficiency is reduced.

To solve such a problem, the negative electrode active material according to an exemplary embodiment of the present invention is characterized in that silicon-based particles including SiOₓ (0<x<2) and a Li compound includes the Li compound present in the form of at least one crystalline lithium silicate selected from the group consisting of crystalline Li₂SiO₃, crystalline Li₄SiO₄ and crystalline Li₂Si₂O₅ or in the form of amorphous lithium silicate, a content of the crystalline Li₂SiO₃ is higher than the sum of a content of the crystalline Li₂Si₂O₅ and a content of the crystalline Li₄SiO₄, and a total content of the crystalline phase present in the silicon-based particles is higher than a total content of the amorphous phase.

According to the negative electrode active material of the present invention, since the content of crystalline Li₂SiO₃ is predominantly high in the crystalline lithium silicate, the loss of discharge capacity per weight depending on an increase in Li content in the negative electrode active material is small, and SiO₂ and Li, which act as irreversible capacity during Li doping, react in large amounts to form a lithium silicate structure of electrochemically stable Li₂SiO₃, so that the negative electrode active material of the present invention can significantly increase the initial efficiency. Further, crystalline Li₂SiO₃ has excellent service life characteristics because the structure is stable during charging and discharging.

According to the negative electrode active material of the present invention, the total content of the crystalline phase is higher than the total content of the amorphous phase, and thus, the contents of lithium oxides and lithium silicates reacting with moisture are low, so that it is possible to prevent the gas generation and viscosity change of the negative electrode slurry and to improve the phase stability of a slurry including the negative electrode active material. Therefore, there is an effect that the qualities of a negative electrode including the negative electrode active material and a secondary battery including the negative electrode are enhanced and the charge/discharge capacity, initial efficiency, and/or service life characteristics thereof are improved.

The negative electrode active material according to an exemplary embodiment of the present invention includes silicon-based particles. The silicon-based particles include SiOₓ (0<x<2) and a Li compound.

The SiOₓ (0<x<2) may correspond to a matrix in the silicon-based particle. The SiOₓ (0<x<2) may be in a form including Si and/or SiO₂, and the Si may also form a phase. For example, the SiOₓ (0<x<2) may be a composite including amorphous SiO₂ and Si crystals. That is, the x corresponds to the number ratio of O for Si included in the SiOₓ (0<x<2). When the silicon-based particles include the SiOₓ (0<x<2), the discharge capacity of a secondary battery may be improved. Specifically, the SiOₓ (0<x<2) may be a compound represented by SiOₓ (0.5≤x≤1.5) in terms of structural stability of the active material.

The Li compound may correspond to a matrix in the silicon-based composite particle. The Li compound may be present in the form of at least one of a lithium atom, a lithium silicate, a lithium silicide, and a lithium oxide in the silicon-based particle. When the silicon-based particles include a Li compound, there is an effect that the initial efficiency is improved.

The Li compound is in a form in which the silicon-based particles are doped with the compound, and may be distributed on the surface and/or inside of the silicon-based particle. The Li compound is distributed on the surface and/or inside of the silicon-based particle, and thus may control the volume expansion/contraction of the silicon-based particles to an appropriate level, and may serve to prevent damage to the active material. Further, the Li compound may be contained in terms of reducing the ratio of the irreversible phase (for example, SiO₂) of the silicon-based oxide particles to increase the efficiency of the active material.

Specifically, the lithium may be distributed on the surface, inside or on the surface and inside of the silicon-based particles. In addition, the silicon-based particles may be doped with the lithium.

In an exemplary embodiment of the present invention, a Li element may be included in an amount of more than 7 parts by weight and 10 parts by weight or less based on total 100 parts by weight of the negative electrode active material.

Preferably, the Li element may be included in an amount of 7.2 parts by weight or more and 9.8 parts by weight or less, 7.5 parts by weight or more and 9.7 parts by weight or less, 8 parts by weight or more and 9.5 parts by weight or less, 8.2 parts by weight or more and 9.5 parts by weight or less, or 8.5 parts by weight or more and 9.2 parts by weight or less based on total 100 parts by weight of the negative electrode active material. When lithium is included within the above range, it is preferred because characteristics of the initial efficiency and charge/discharge efficiency of the negative electrode active material may be improved. In contrast, when Li is included in a content less than the above content, there is a problem in that the Li content in the silicon-based particles is insufficient, resulting in a significant deterioration in discharge capacity and efficiency, and when the content of Li exceeds the above content, there is a problem in that the silicon-based particles and unreacted Li remain as by-products, and thus the aqueous slurry becomes strongly basic, which may adversely affect the slurry processability.

The upper limit of content of the Li may be 10 parts by weight, 9.8 parts by weight, 9.7 parts by weight, 9.6 parts by weight, 9.5 parts by weight, 9.4 parts by weight, 9.3 parts by weight, 9.2 parts by weight, 9.1 parts by weight or 9 parts by weight, and the lower limit thereof may be 7.2 parts by weight, 7.5 parts by weight, 7.8 parts by weight, 8 parts by weight, 8.2 parts by weight or 8.5 parts by weight, based on total 100 parts by weight of the negative electrode active material.

The content of the Li element may be confirmed by ICP analysis. Specifically, after a predetermined amount (about 0.01 g) of the negative electrode active material is aliquoted, the negative electrode active material is completely decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid prepared using a standard solution (5 mg/kg) in an intrinsic wavelength of an element to be analyzed using an inductively coupled plasma atomic emission spectrometer (ICPAES, Perkin-Elmer 7300). Thereafter, a pre-treated sample solution and a blank sample are each introduced into the apparatus, an actual intensity is calculated by measuring each intensity, the concentration of each component relative to the prepared calibration curve is calculated, and then the contents of the elements of the prepared negative electrode active material may be analyzed by converting the total sum so as to be the theoretical value.

In an exemplary embodiment of the present invention, the Li compound may be distributed in the form of lithium silicate in the silicon-based particles, and accordingly, the Li compound may serve to improve the initial efficiency and charge/discharge efficiency of the negative electrode active material by removing the irreversible capacity of the particles. In this case, silicate means a compound including silicon, oxygen and one or more metals.

Specifically, the Li compound may be distributed in the form of a lithium silicate on the surface, inside or on the surface and inside of the silicon-based particles, and the lithium silicate may correspond to a matrix in the particles. The lithium silicate is represented by LiₐSi_{b}O_{c} (2≤a≤4, 0<b≤2, 2≤c≤5) and may be classified into crystalline lithium silicate and amorphous lithium silicate. The crystalline lithium silicate may be present in the form of at least one lithium silicate selected from the group consisting of Li₂SiO₃, Li₄SiO₄ and Li₂Si₂O₅ in the silicon-based particles, and the amorphous lithium silicate may consist of a complex structure in the form of LiₐSi_{b}O_{c} (2≤a≤4, 0<b≤2, 2≤c≤5), and the lithium silicates are not limited to the forms.

In an exemplary embodiment of the present invention, the Li compound may include at least one crystalline lithium silicate selected from the group consisting of crystalline Li₂SiO₃, crystalline Li₄SiO₄ and crystalline Li₂Si₂O₅. Further, the Li compound may further include amorphous lithium silicate.

Specifically, the Li compound included in the silicon-based particles includes crystalline Li₂SiO₃ and crystalline Li₂Si₂O₅, and optionally, may further include crystalline Li₄SiO₄ or amorphous lithium silicate.

When the negative electrode active material contains a large amount of crystalline Li₂SiO₃, the discharge capacity loss per weight of the active material may be reduced, and the crystalline Li₂SiO₃ has an electrochemically stable structure, and may significantly increase the initial efficiency, and may effectively improve the service life characteristics because the structure is stable even during charging and discharging.

The crystalline Li₂Si₂O₅ is stable in the negative electrode active material, and particularly causes less side reactions with moisture in a negative electrode slurry, specifically an aqueous negative electrode slurry. However, when the negative electrode active material contains a large amount of crystalline Li₂Si₂O₅, there is a problem in that the discharge capacity loss per weight of the active material is large, and the crystalline Li₂Si₂O₅ has an unstable structure during charging and discharging, resulting in deterioration in service life characteristics.

In the case of the crystalline Li₄SiO₄, there is a problem of causing side reactions with moisture in the negative electrode slurry, which makes gas generation serious, and there may occur a problem in that by-products such as Li₂O formed by side reactions with moisture increase the pH of the negative electrode slurry, destabilize the phase of the slurry, and change the viscosity.

In this regard, since a content of the crystalline Li₂SiO₃ is higher than a content of the crystalline Li₂Si₂O₅ and a content of the crystalline Li₄SiO₄ in the negative electrode active material of the present invention, the initial efficiency and charge/discharge efficiency may be improved by smoothly removing the irreversible capacity of the negative electrode active material, and by improving the phase stability of a negative electrode slurry including the negative electrode active material and preventing the problem in that the viscosity is lowered, the quality of the negative electrode may be improved, the charge/discharge capacity may be expressed at an excellent level, and the charge/discharge efficiency may be improved. Further, as described below, since the negative electrode active material of the present invention reduces the total content of the amorphous phase along with the enhancement of the content of the crystalline Li₂SiO₃, it is possible to improve the phase stability of the above-described negative electrode slurry, prevent the negative electrode from malfunctioning, and remarkably improve the charge/discharge capacity and efficiency.

The negative electrode active material of the present invention may include a Li element in an amount of more than 7 parts by weight and 10 parts by weight or less, and when the content of crystalline Li₂SiO₃ is higher than the content of crystalline Li₂Si₂O₅ within this range, the negative electrode active material has a small loss of discharge capacity per weight depending on an increase in Li content and has an electrochemically stable lithium silicate structure, so that due to the stable structure even during charging and discharging, there is an effect that a high discharge capacity may be implemented when the same initial efficiency is implemented, and service life characteristics are excellent. Further, as described below, there is an effect capable of preventing side reactions with moisture by reducing the total content of the amorphous phase in the negative electrode active material.

In contrast, when the content of crystalline Li₂Si₂O₅ is higher than the content of crystalline Li₂SiO₃, the side reactions with moisture may less frequently occur, but there may occur a problem in that the loss of discharge capacity per weight depending on an increase in Li content in the negative electrode active material is large, the discharge capacity is low when the same initial efficiency is implemented due to the unstable structure during charging and discharging, and service life characteristics deteriorate.

In an exemplary embodiment of the present invention, a content of the crystalline Li₂SiO₃ is higher than the sum of a content of the crystalline Li₂Si₂O₅ and a content of the crystalline Li₄SiO₄. In another exemplary embodiment, the content of the crystalline Li₂SiO₃ may be higher than the content of the crystalline Li₂Si₂O₅.

In an exemplary embodiment of the present invention, the crystalline Li₂SiO₃ is included in an amount of 60 parts by weight or more based on total 100 parts by weight of crystalline lithium silicate. In another exemplary embodiment, the crystalline Li₂SiO₃ may be included in an amount of 65 parts by weight or more, 70 parts by weight or more, 74 parts by weight or more.

In an exemplary embodiment of the present invention, the crystalline Li₂SiO₃ may be included in an amount of 15 parts by weight or more and 50 parts by weight or less based on total 100 parts by weight of the silicon-based particles. In another exemplary embodiment, the crystalline Li₂SiO₃ may be included in an amount of 17 parts by weight or more and 48 parts by weight or less, 20 parts by weight or more and 48 parts by weight or less, 20 parts by weight or more and 45 parts by weight or less, 25 parts by weight or more and 45 parts by weight or less, 30 parts by weight or more and 45 parts by weight or less or 35 parts by weight or more and 42 parts by weight or less. When the content of the crystalline Li₂SiO₃ satisfies the above range, it is preferred in terms of implementation of capacity/efficiency and excellent service life characteristics because it is advantageous in implementing the capacity per gram and Li₂SiO₃ is stable during charging and discharging. When the content exceeds the above range, there is a problem in that the processability of the aqueous slurry is adversely affected due to high reactivity of Li₂SiO₃ with water, and when the crystalline Li₂SiO₃ is included in an amount less than the above range, there is a problem in that implementation of capacity/efficiency and service life characteristics deteriorate because it is disadvantageous in implementing the capacity per gram and stable Li₂SiO₃ is insufficient during charging and discharging.

The upper limit of the content of the crystalline Li₂SiO₃ may be 50 parts by weight, 48 parts by weight, 45 parts by weight, 42 parts by weight or 40 parts by weight, and the lower limit thereof may be 15 parts by weight, 17 parts by weight, 20 parts by weight, 25 parts by weight, 30 parts by weight, 33 parts by weight, 35 parts by weight or 38 parts by weight, based on total 100 parts by weight of the silicon-based particles.

In an exemplary embodiment of the present invention, the crystalline Li₂Si₂O₅ may be included in an amount of 0.5 parts by weight or more and 20 parts by weight or less based on total 100 parts by weight of the silicon-based particles. In another exemplary embodiment, the crystalline Li₂Si₂O₅ may be included in an amount of 1 part by weight or more and 18 parts by weight or less, 3 parts by weight or more and 18 parts by weight or less, 3 parts by weight or more and 15 parts by weight or less or 3 parts by weight or more and 12 parts by weight or less.

The upper limit of the content of the crystalline Li₂Si₂O₅ may be 20 parts by weight, 18 parts by weight, 15 parts by weight, or 12 parts by weight, and the lower limit thereof may be 0.1 parts by weight, 0.5 parts by weight, 1 part by weight, 3 parts by weight, or 5 parts by weight, based on total 100 parts by weight of the silicon-based particles.

When the content of crystalline Li₂Si₂O₅ exceeds the above range, there is a problem in that service life characteristics deteriorate because the loss of the capacity per weight is excessively increased and the structure of Li₂Si₂O₅ becomes unstable. When the content of crystalline Li₂Si₂O₅ is less than the above range, the amount of Li₂Si₂O₅, which has low reactivity with water, may be too small, resulting in deterioration in processability of the aqueous slurry. Therefore, when the content of crystalline Li₂Si₂O₅ satisfies the above range, it is preferred to implement appropriate charge capacity, initial efficiency and service life characteristics during the driving of the battery because the loss of the capacity per weight may be minimized, service life characteristics do not excessively deteriorate, and the processability of the aqueous slurry is also appropriately secured.

In an exemplary embodiment of the present invention, the crystalline Li₄SiO₄ may be included in an amount of 5 parts by weight or less, specifically 3 parts by weight or less, 1 part by weight or less or less than 0.1 parts by weight based on total 100 parts by weight of the silicon-based particles, and more specifically, the crystalline Li₄SiO₄ may not be present in the negative electrode active material. When the content of the crystalline Li₄SiO₄ satisfies the above range, it is preferred in terms of the fact that during the preparation of a negative electrode slurry, specifically, an aqueous negative electrode slurry, the generation of by-products such as Li₂O caused by reactions of the negative electrode active material and moisture, an increase in pH of the negative electrode slurry caused by the generation of by-products, and a deterioration in quality of the negative electrode are prevented.

In an exemplary embodiment of the present invention, a difference between the content of the crystalline Li₂SiO₃ and the content of the crystalline Li₂Si₂O₅ may be 1 part by weight to 50 parts by weight based on total 100 parts by weight of the silicon-based particles. Specifically, the difference between the content of the crystalline Li₂Si₂O₅ and the content of the crystalline Li₂SiO₃ may be 5 parts by weight to 45 parts by weight, 8 parts by weight to 45 parts by weight, 10 parts by weight to 40 parts by weight, 20 parts by weight to 40 parts by weight or 20 parts by weight to 35 parts by weight.

The upper limit of the difference between the content of the crystalline Li₂SiO₃ and the content of the crystalline Li₂Si₂O₅ may be 50 parts by weight, 45 parts by weight, 40 parts by weight or 38 parts by weight, and the lower limit thereof may be 1 part by weight, 5 parts by weight, 8 parts by weight, 10 parts by weight, 15 parts by weight or 20 parts by weight, based on total 100 parts by weight of the silicon-based particles.

When the difference between the content of the crystalline Li₂Si₂O₅ and the content of the crystalline Li₂SiO₃ satisfies the above range, it is possible to improve the phase stability of the above-described negative electrode slurry, prevent the negative electrode from malfunctioning, and remarkably improve the charge/discharge capacity and efficiency.

Confirmation and content measurement of the crystalline lithium silicate of the crystalline Li₂SiO₃, crystalline Li₄SiO₄ or crystalline Li₂Si₂O₅ may be performed by an analysis through an X-ray diffraction profile by X-ray diffraction analysis or ²⁹Si-magic angle spinning-nuclear magnetic resonance (²⁹Si-MAS-NMR).

Among them, ²⁹Si-MAS-NMR analysis is a type of solid phase NMR techniques, and is an NMR analysis performed by rapidly spinning a rotor containing a sample at a magic angle B_{M} (for example, 54.74°) with respect to the magnetic field B₀. Through this, it is possible to measure the presence/absence, content, and the like of the crystalline Li₂SiO₃, the crystalline Li₄SiO₄, the crystalline Li₂Si₂O₅, the crystalline Si, and the crystalline SiO₂ included in the negative electrode active material of the present invention.

In an exemplary embodiment of the present invention, during the ²⁹Si-MAS-NMR analysis of the negative electrode active material, the height of a peak p1 of Li₂SiO₃ that appears at a chemical shift peak of -70 ppm to -80 ppm may be larger than the height of a peak p2 of Li₂Si₂O₅ that appears at a chemical shift peak of -90 ppm to -100 ppm.

In an exemplary embodiment of the present invention, during the ²⁹Si-MAS-NMR analysis of the negative electrode active material, the ratio p2/p1 of the height of a peak p2 of Li₂Si₂O₅ that appears at a chemical shift peak of -90 ppm to -100 ppm to the height of a peak p1 of Li₂SiO₃ that appears at a chemical shift peak of -70 ppm to -80 ppm may be 1 or less. Specifically, the ratio may be 0.01 or more and 0.8 or less, 0.05 or more and 0.7 or less, 0.1 or more and 0.6 or less. When the ratio satisfies the above range, crystalline Li₂SiO₃ is sufficiently present in the negative electrode active material, so that it is possible to improve the phase stability of the above-described negative electrode slurry, prevent the negative electrode from malfunctioning, and remarkably improve the charge/discharge capacity and efficiency.

The upper limit of the p2/p1 may be 1, 0.8, 0.7, 0.6, 0.5 or 0.4, and the lower limit thereof may be 0.01, 0.05, 0.1, 0.15 or 0.2.

In an exemplary embodiment of the present invention, a peak p3 of Li₄SiO₄ that appears at a chemical shift peak of -60 ppm to -69 ppm may not be present during the ²⁹Si-MAS-NMR analysis of the negative electrode active material. In this case, it is preferred in terms of the fact that generation of by-products such as Li₂O caused by side reactions of moisture with Li₄SiO₄ in the negative electrode active material, an increase in pH of the negative electrode slurry caused by the generation of by-products, and a deterioration in quality of the negative electrode are prevented.

The contents of the crystalline Li₂SiO₃, crystalline Li₄SiO₄, and crystalline Li₂Si₂O₅ may be implemented by performing a heat treatment process, adjusting the heat treatment temperature, performing an acid treatment process, and the like in a method for preparing a negative electrode active material to be described below, but are not limited thereto.

In an exemplary embodiment of the present invention, the negative electrode active material may include crystalline SiO₂ in an amount of less than 5 parts by weight, specifically less than 4 parts by weight, and 3 parts by weight or less in still another exemplary embodiment, based on total 100 parts by weight of the silicon-based particles. Preferably, the negative electrode active material includes crystalline SiO₂ in an amount of 1 part by weight or less, based on total 100 parts by weight of the silicon-based particles, but may not include crystalline SiO₂ at all. When the content of the crystalline SiO₂ satisfies the above range, the negative electrode is readily charged and discharged, so that the charge/discharge capacity and efficiency may be excellently improved.

In an exemplary embodiment of the present invention, the negative electrode active material may include crystalline Si in an amount of 10 parts by weight to 50 parts by weight, 15 parts by weight to 40 parts by weight, 15 parts by weight to 30 parts by weight, 20 parts by weight to 30 parts by weight or 20 parts by weight to 25 parts by weight based on total 100 parts by weight of the silicon-based particles. When the content of the crystalline Si satisfies the above range, the negative electrode is readily charged and discharged, so that the charge/discharge capacity and efficiency may be excellently improved.

In an exemplary embodiment of the present invention, the total content of the crystalline phase present in the silicon-based particles is higher than the total content of the amorphous phase. The total content of the crystalline phase means the total content of all the crystalline phases including crystalline Si, crystalline SiO₂, crystalline Li₂SiO₃, crystalline Li₄SiO₄, crystalline Li₂Si₂O₅, and the like, which are present in the silicon-based particles, and the total content of the amorphous phase may mean the content except for the total content of the crystalline phase present in the silicon-based particles. That is, the total content of the amorphous phase includes amorphous SiO₂ and the like in addition to the amorphous lithium silicate, and means the sum of the contents of the total amorphous phases present in the particles.

Since the total content of the crystalline phase present in the silicon-based particles is higher than the total content of the amorphous phase in the negative electrode active material of the present invention, the content of amorphous lithium silicate and the like, which are highly reactive with moisture, is reduced during the preparation of a negative electrode slurry, specifically an aqueous negative electrode slurry, so that it is preferred in terms of the fact that the generation of by-products such as Li₂O caused by side reactions with moisture, an increase in pH of the negative electrode slurry caused by the generation of by-products, and a deterioration in quality of the negative electrode are prevented.

In an exemplary embodiment of the present invention, the total content of the crystalline phase present in the silicon-based particles may be more than 50 parts by weight and 85 parts by weight or less based on total 100 parts by weight of the silicon-based particles. Specifically, the total content of the crystalline phase present in the silicon-based particles may be 55 parts by weight or more and 85 parts by weight or less, 55 parts by weight or more and 80 parts by weight or less, 55 parts by weight or more and 75 parts by weight or less, 60 parts by weight or more and 70 parts by weight or less, 62 parts by weight or more and 68 parts by weight or less, 64 parts by weight or more and 68 parts by weight or less or 64 parts by weight or more and 66 parts by weight or less.

The upper limit of the total content of the crystalline phase may be 85 parts by weight, 83 parts by weight, 80 parts by weight, 75 parts by weight, 70 parts by weight, 68 parts by weight or 66 parts by weight, and the lower limit thereof may be 55 parts by weight, 60 parts by weight, 62 parts by weight or 64 parts by weight, based on total 100 parts by weight of the silicon-based particles.

In an exemplary embodiment of the present invention, the total content of the amorphous phase present in the silicon-based particles may be 15 parts by weight or more and less than 50 parts by weight based on total 100 parts by weight of the silicon-based particles. Specifically, the total content of the amorphous phase present in the silicon-based particles may be 20 parts by weight or more and less than 50 parts by weight, 25 parts by weight or more and less than 50 parts by weight, 25 parts by weight or more and 45 parts by weight or less, 30 parts by weight or more and 40 parts by weight or less, 32 parts by weight or more and 36 parts by weight or less or 34 parts by weight or more and 36 parts by weight or less.

The upper limit of the total content of the amorphous phase may be 48 parts by weight, 45 parts by weight, 40 parts by weight, 38 parts by weight or 36 parts by weight, and the lower limit thereof may be 15 parts by weight, 20 parts by weight, 25 parts by weight, 30 parts by weight, 32 parts by weight or 34 parts by weight, based on total 100 parts by weight of the silicon-based particles.

In an exemplary embodiment of the present invention, the difference between the total content of the crystalline phase present in the silicon-based particles and the total content of the amorphous phase present in the silicon-based particles may be 10 parts by weight or more and 70 parts by weight or less, 20 parts by weight or more and 68 parts by weight or less, 20 parts by weight or more and 50 parts by weight or less, 25 parts by weight or more and 40 parts by weight or less, 28 parts by weight or more and 36 parts by weight or less or 30 parts by weight or more and 36 parts by weight or less based on total 100 parts by weight of the silicon-based particles.

The upper limit of the difference between the total content of the crystalline phase and the total content of the amorphous phase present in the silicon-based particles may be 70 parts by weight, 68 parts by weight, 66 parts by weight, 60 parts by weight, 50 parts by weight, 40 parts by weight or 36 parts by weight, and the lower limit thereof may be 10 parts by weight, 15 parts by weight, 20 parts by weight, 25 parts by weight, 28 parts by weight or 30 parts by weight, based on total 100 parts by weight of the silicon-based particles.

In an exemplary embodiment of the present invention, the ratio of the total weight of the crystalline phase relative to the total weight of the amorphous phase present in the silicon-based particles (the total weight of the crystalline phase : the total weight of the amorphous phase) may be 55:45 to 85:15, or 60:40 to 80:20, or 60:40 to 75:25.

When the relationship of the contents of the crystalline phase and amorphous phase present in the silicon-based particles satisfies the above range, the contents of the crystalline phase and amorphous phase present in the negative electrode active material are appropriately adjusted, so that during the preparation of a negative electrode slurry (specifically, an aqueous negative electrode slurry), the content of amorphous lithium silicate, and the like, which are highly reactive with moisture, is reduced, so that the generation of by-products such as Li₂O caused by side reactions with moisture, an increase in pH of the negative electrode slurry caused by the generation of by-products, and a change in viscosity may be prevented, and it is preferred in terms of the fact that the content of crystalline SiO₂, which hinders the expression of the charge/discharge capacity and efficiency, is not excessively increased.

Although the content of crystalline Li₂SiO₃ is the highest among lithium silicates, when the total content of the crystalline phase present in the negative electrode active material does not satisfy the above range, the crystalline phase is excessively included in the negative electrode active material, so that there is a problem in that it is difficult to implement capacity/efficiency and the service life characteristics also deteriorate because the battery is not readily charged and discharged, and when the crystalline Li₂SiO₃ is included in an amount less than the above range, there is a problem in that it is difficult to effectively control side reactions with moisture because the crystalline phase is not sufficiently included.

The total contents of the crystalline phase and the amorphous phase, which are present in the silicon-based particles may be measured by a quantitative analysis method using an X-ray diffraction analysis (XRD).

In an exemplary embodiment of the present invention, the silicon-based particles may include an additional metal atom. The metal atom may be present in the form of at least one of a metal atom, a metal silicate, a metal silicide, and a metal oxide in the silicon-based particle. The metal atom may include at least one selected from the group consisting of Mg, Li, Al and Ca. Accordingly, the initial efficiency of the negative electrode active material may be improved.

In an exemplary embodiment of the present invention, the silicon-based particles have a carbon layer provided on at least a part of the surface thereof. In this case, the carbon layer may be in the form of being coated on at least a part of the surface, that is, may be partially coated on the particle surface or may be coated on the entire particle surface. By the carbon layer, conductivity is imparted to the negative electrode active material, and the initial efficiency, service life characteristics, and battery capacity characteristics of the secondary battery may be improved.

In an exemplary embodiment of the present invention, the carbon layer includes amorphous carbon. Further, the carbon layer may additionally include crystalline carbon.

The crystalline carbon may further improve the conductivity of the negative electrode active material. The crystalline carbon may include at least one selected in the group consisting of fullerene, carbon nanotubes and graphene.

The amorphous carbon may suppress the expansion of the silicon-based particles by appropriately maintaining the strength of the carbon layer. The amorphous carbon may be a carbide of at least one material selected from the group consisting of tar, pitch and other organic materials, or may be a carbon-based material formed using a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The hydrocarbon may be a substituted or unsubstituted aliphatic or alicyclic hydrocarbon, or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane, or the like. Examples of the aromatic hydrocarbon of the substituted or unsubstituted aromatic hydrocarbon include benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present invention, the carbon layer may be an amorphous carbon layer.

In an exemplary embodiment of the present invention, the carbon layer may be included in an amount of 0.1 parts by weight to 50 parts by weight, 0.1 parts by weight to 30 parts by weight or 0.1 parts by weight to 20 parts by weight, based on total 100 parts by weight of the negative electrode active material. More specifically, the carbon layer may be included in an amount of 0.5 parts by weight to 15 parts by weight, 1 part by weight to 10 parts by weight or 1 part by weight to 5 parts by weight. When the above range is satisfied, it is possible to prevent a decrease in the capacity and efficiency of the negative electrode active material.

In an exemplary embodiment of the present invention, the carbon layer may have a thickness of 1 nm to 500 nm, specifically 5 nm to 300 nm. When the above range is satisfied, the conductivity of the negative electrode active material is improved, the volume change of the negative electrode active material is readily suppressed, and side reactions between an electrolytic solution and the negative electrode active material are suppressed, so that there is an effect that the initial efficiency and/or service life of a battery is/are improved.

Specifically, the carbon layer may be formed by a chemical vapor deposition (CVD) method using at least one hydrocarbon gas selected from the group consisting of methane, ethane and acetylene.

In the present invention, the crystallinity of the carbon layer may be confirmed by calculating the D/G band ratio by Raman spectroscopy. Specifically, the D/G band ratio may be measured using Renishaw 2000 Raman microscope system and 532 nm laser excitation and using 100x optical lens under conditions of a low laser power density and an exposure time of 30 seconds to avoid laser thermal effects. After a total of 25 points in a 5 um x 5 um region are measured and fitting is performed using the Lorentzian function to reduce positional deviation, the D/G band ratio may be calculated by calculating the average value of the D band and the G band.

In an exemplary embodiment of the present invention, a lithium by-product may be present on the silicon-based particles. Specifically, the lithium by-product may be present on the surface of the silicon-based particles or present on the surface of the carbon layer. In addition, the lithium by-product may be present between a surface layer to be described below and the silicon-based particles.

Specifically, the lithium by-product may mean a lithium compound remaining near the surface of the silicon-based particles or the carbon layer after preparing the silicon-based particles. As described above, even after the acid treatment process, a lithium by-product which has not been reacted with the acid may remain.

The lithium by-product may include one or more selected from the group consisting of Li₂O, LiOH and Li₂CO₃.

Whether the lithium by-product is present can be confirmed through X-ray diffraction analysis (XRD) or X-ray photoelectron spectroscopy (XPS).

The lithium by-product may be included in an amount of 5 parts by weight or less based on total 100 parts by weight of the negative electrode active material. Specifically, the lithium by-product may be included in an amount of 0.01 parts by weight to 5 parts by weight, 0.05 parts by weight to 2 parts by weight or 0.1 parts by weight to 1 part by weight. More specifically, the lithium by-product may be included in an amount of 0.1 parts by weight to 0.8 parts by weight or 0.1 parts by weight to 0.5 parts by weight. When the content of the lithium by-product satisfies the above range, side reactions in the slurry may be reduced, and the water-based processability may be improved by lowering the change in viscosity. In contrast, when the content of the lithium by-product is higher than the above range, there is a problem in that the slurry becomes basic during the slurry formation, which causes side reactions or changes in viscosity, and a water-based processability issue.

For the content of the lithium by-product, the amount of the lithium by-product may be calculated after measuring the amount of a HCl solution in a specific interval where the pH changes during the process of titrating an aqueous solution including the negative electrode active material with the HCl solution using a titration group.

In an exemplary embodiment of the present invention, lithium by-products selected from the group consisting of crystalline lithium silicates, Li₂O, LiOH and Li₂CO₃ may be scarcely present or may not be present on the surface of the negative electrode active material. The lithium by-products increase the pH of the negative electrode slurry, lower the viscosity thereof, and thus may cause the electrode state of the negative electrode to be poor. Accordingly, an effect of improving the quality and charge/discharge efficiency of the negative electrode may be implemented at a preferred level by performing an acid treatment process of the negative electrode active material to remove lithium silicates and by-products such as Li₂O present on the surface of the negative electrode active material.

The silicon-based particles according to an exemplary embodiment of the present invention include a surface layer provided on at least a part of the silicon-based particle, and the surface layer may include Al, P, and O.

In an exemplary embodiment of the present invention, the surface layer may further include a Li element.

The surface layer may be in the form of being coated on at least a part on a silicon-based particle having a carbon layer provided on the surface. That is, the surface layer may be in the form of being partially coated on the particle surface or being coated on the entire particle surface. Examples of a shape of the surface layer include an island type, a thin film type, or the like, but the shape of the surface layer is not limited thereto.

The surface layer may be provided on at least a part on the external surface of the carbon layer. That is, the surface layer is coated adjacently on the carbon layer, and thus may be provided in the form of a silicon-based particle-carbon layer-surface layer including SiOₓ (0<x<2) and a Li compound. The surface layer may substantially or completely cover the carbon layer or partially cover the carbon layer.

The surface layer may be provided on a region in which the carbon layer is not provided on the surface of the silicon-based particles including the SiOₓ (0<x<2) and the Li compound. That is, the surface layer is coated adjacently on the silicon-based particle including the SiOₓ (0<x<2) and the Li compound, and thus may be provided in the form of a silicon-based particle-surface layer including SiOₓ (0<x<2) and the Li compound.

In an exemplary embodiment of the present invention, the Al may be included in an amount of 0.05 parts by weight to 0.4 parts by weight based on total 100 parts by weight of the negative electrode active material. Specifically, the Al may be included in an amount of 0.1 part by weight to 0.4 part by weight, 0.12 part by weight to 0.35 part by weight, or 0.15 part by weight to 0.3 part by weight.

In an exemplary embodiment of the present invention, the P may be included in an amount of 0.05 parts by weight to 2 parts by weight based on total 100 parts by weight of the negative electrode active material. Specifically, the P may be included in an amount of 0.1 part by weight to 1.5 parts by weight, or 0.15 part by weight to 1 part by weight.

The surface layer may include a Al_{z}P_{w}Oᵥ (0<z≤10, 0<w≤10, and 0<v≤10) phase. The Al_{z}P_{w}Oᵥ phase may include an aluminum oxide, a phosphorus oxide, an aluminum phosphate and the like, and z, y and v mean the number ratio of each atom. In an example, the Al_{z}P_{w}Oᵥ phase may include a mixture or compound formed from AlPO₄, Al(PO₃)₃, or the like, but is not limited thereto.

The surface layer may include a Li_{y}Al_{z}P_{w}Oᵥ (0<y≤10, 0<z≤10, 0<w≤10, and 0<v≤10) phase. The Li_{y}Al_{z}P_{w}Oᵥ phase may include an aluminum oxide, a phosphorus oxide, a lithium oxide, an aluminum phosphate, a lithium salt, a lithium phosphate, a lithium aluminate, and the like, and y, z, w and v means the number ratio of each atom. In an example, the Li_{y}Al_{z}P_{w}Oᵥ phase may include a mixture or compound formed from Li₃PO₄, AlPO₄, Al(PO₃)₃, LiAlO₂, or the like, but is not limited thereto.
y may satisfy 0<y≤3.
z may satisfy 0<z≤1.
w may satisfy 0.5≤w≤3.
v may satisfy 4<v<12.

When an inorganic surface layer including the phase described above is provided, it is possible to prevent a phenomenon in which the Li compound included in the silicon-based particles reacts with the moisture of the slurry to lower the viscosity of the slurry, and there is an effect of improving the stability of the electrode state and/or the charge/discharge capacity.

In an exemplary embodiment of the present invention, the surface layer may include an amorphous phase. Specifically, the surface layer may be an amorphous phase.

When the surface layer includes the aforementioned amorphous phase, there is an effect that it is possible to stably implement the capacity and/or efficiency while effectively reducing side reactions on the slurry because the entry and exit of Li ions is facilitated compared to the case where the surface layer does not include an amorphous phase.

In an exemplary embodiment of the present invention, the surface layer may further include one or more selected from the group consisting of Li₂O, LiOH and Li₂CO₃. In general, since materials remaining in the process of doping silicon-based particles with lithium may be exposed to moisture or air to form lithium by-products such as Li₂O, LiOH and Li₂CO₃, the surface layer may be in the form including one or more selected from the group consisting of Li₂O, LiOH and Li₂CO₃.

In an exemplary embodiment of the present invention, during the X-ray diffraction analysis of the negative electrode active material, a crystalline peak derived from the surface layer may not appear. Specifically, a crystalline peak derived from a Li_{y}Al_{z}P_{w}Oᵥ (0<y≤10, 0<z≤10, 0<w≤10, and 0<v≤10) phase included on the surface layer may not be detected. When the crystalline peak derived from the surface layer appears, there is a problem in that the capacity and/or efficiency deteriorate(s) because the surface layer includes an excessive amount of crystalline material. In an example, the crystalline peak derived from the surface layer can be recognized through changes before and after the coating of the surface layer. Specifically, in the case of XRD, crystalline peaks are detected, and it can be confirmed that when there is no difference in XRD graph of the negative electrode active material before and after the coating of the surface layer, the crystalline peak derived from the surface layer does not appear and the surface layer is formed of an amorphous phase.

In an exemplary embodiment of the present invention, the amorphous phase included in the surface layer may be included in an amount of more than 50 parts by weight based on total 100 parts by weight of the surface layer. Specifically, the amorphous phase may be included in an amount of 60 parts by weight or more, 70 parts by weight or more, 80 parts by weight or more, 90 parts by weight or more, 95 parts by weight or more or 99 parts by weight or more, and 100 parts by weight or less or less than 100 parts by weight, based on total 100 parts by weight of the surface layer. By satisfying the above range, there is an effect capable of efficiently suppressing side reactions on the slurry and stably implementing the capacity and/or efficiency.

In an exemplary embodiment of the present invention, the surface layer may be included in an amount of 10 parts by weight or less based on total 100 parts by weight of the negative electrode active material. Specifically, the surface layer may be included in an amount of 8 parts by weight or less, 6 parts by weight or less or 5 parts by weight or less, and 0.1 part by weight or more or 0.5 part by weight or more. More specifically, the surface layer may be included in an amount of 1 part by weight or more and 5 parts by weight or less or 1.5 parts by weight or more and 3 parts by weight or less. There are problems in that when the content of the surface layer is less than the above range, it is difficult to prevent the generation of gas on the slurry, and when the content is more than the above range, it is difficult to implement the capacity or efficiency.

In an exemplary embodiment of the present invention, the weight ratio of the surface layer and the carbon layer may be 1 : 0.1 to 1 : 30. Specifically, the weight ratio may be 1 : 0.5 to 1 : 5 or 1 : 1 to 1 : 4 or 1 : 1 to 1 : 3. By satisfying the above range, silicon-based composite particles can be effectively coated with the carbon layer and the surface layer to efficiently suppress side reactions on the slurry and the capacity and/or efficiency can be stably implemented. In contrast, there are problems in that when the content of the surface layer is too higher than that of the carbon layer, it is difficult to implement the capacity or efficiency, and when the content of the carbon layer is too higher than that of the surface layer, it is difficult to prevent the generation of gas on the slurry.

In an exemplary embodiment of the present invention, the surface layer may be included in an amount of 90 parts by weight or less based on 100 parts by weight of the carbon layer. Specifically, the surface layer may be included in an amount of 80 parts by weight or less, 70 parts by weight or less, 60 parts by weight or less, and 50 parts by weight or less, based on 100 parts by weight of the carbon layer. Further, the surface layer may be included in an amount of 0.1 part by weight or more, 1 part by weight or more, 5 parts by weight or more, and 10 parts by weight or more, based on 100 parts by weight of the carbon layer. By satisfying the above range, there is an effect capable of effectively coating silicon-based composite particles with the carbon layer and the surface layer to efficiently suppress side reactions on the slurry and stably implementing the capacity and/or efficiency.

The negative electrode active material may have an average particle diameter (D50) of 0.1 um to 14 um, specifically 1 um to 12 µm, and more specifically 1 um to 10 um. When the above range is satisfied, the active material during charging and discharging is ensured to be structurally stable, and it is possible to prevent a problem in that the volume expansion/contraction level also becomes large as the particle diameter is excessively increased, and to prevent a problem in that the initial efficiency is reduced because the particle diameter is excessively small.

The negative electrode active material may have a BET specific surface area of 1 m²/g to 100 m²/g, specifically 1 m²/g to 70 m²/g, more specifically 1 m²/g to 50 m²/g, and for example, 2 m²/g to 30 m²/g. When the above range is satisfied, side reactions with an electrolytic solution during the charging and discharging of a battery may be reduced, so that the service life characteristics of the battery may be improved.

### <Preparation method of negative electrode active material>

The present invention provides a method for preparing a negative electrode active material, specifically a method for preparing the above-described negative electrode active material.

An exemplary embodiment of the present invention provides a method for preparing the negative electrode active material according to the present invention, the method including: forming particles including a silicon-based oxide represented by SiOₓ (0<x<2); and mixing particles including the silicon-based oxide and a lithium precursor, and then heat-treating the resulting mixture.

The forming of the particles including the silicon-based oxide represented by SiOₓ (0<x<2) may include vaporizing a Si powder and a SiO₂ powder by heating the powders under vacuum, and then depositing the vaporized mixed gas.

Specifically, the mixed powder of the Si powder and the SiO₂ powder may be heat-treated at 1300°C to 1800°C, 1400°C to 1800°C or 1400°C to 1600°C under vacuum.

Particles formed by the method are represented by SiOₓ (0<x<2), and it is preferred that the silicon-based oxide is a compound represented by SiOₓ (0.5≤x≤1.5) in terms of structural stability of the active material.

The formed silicon-based oxide may have a form of SiO.

The method for preparing the negative electrode active material according to an exemplary embodiment of the present invention may further include forming a carbon layer on the surface of particles including a silicon-based oxide represented by SiOₓ (0<x<2) before mixing a lithium precursor.

The carbon layer is disposed or formed on the particles, and thus may function as a protective layer capable of appropriately controlling volume expansion according to charging and discharging of the negative electrode active material and preventing side reactions with an electrolytic solution. Meanwhile, a process of forming the carbon layer may be performed before the process of mixing the particles with the lithium precursor in terms of the fact that changes in crystalline phase and amorphous phase of the negative electrode active material are prevented.

The carbon layer may be formed using chemical vapor deposition (CVD) using a hydrocarbon gas or by a method of carbonizing a material which is a carbon source.

Specifically, the carbon layer may be formed by introducing the formed particles into a reaction furnace, and then subjecting a hydrocarbon gas to chemical vapor deposition (CVD) at 600 to 1,200°C in order to prevent changes in the crystalline phase and the amorphous phase. The hydrocarbon gas may be at least one hydrocarbon gas selected from the group consisting of methane, ethane, propane and acetylene, and may be heat-treated at 900°C to 1,000°C.

The particle size of particles including the silicon-based oxide may be adjusted by a method such as a ball mill, a jet mill, or an air current classification, and the method is not limited thereto.

The method for preparing the negative electrode active material according to an exemplary embodiment of the present invention may include mixing particles including the silicon-based oxide and a lithium precursor, and then heat-treating the resulting mixture.

Silicon-based particles including SiOₓ (0<x<2) and a Li compound may be prepared by the mixing of the particles including the silicon-based oxide and the lithium precursor, and then heat-treating of the resulting mixture. For the silicon-based particles, the content of Li₂SiO₃ in the particle is higher than the content of crystalline Li₂Si₂O₅ and the content of crystalline Li₄SiO₄, and the total content of the crystalline phase present in the particles may be higher than the total content of the amorphous phase.

The lithium precursor may allow a Li compound to be included in the particles including the silicon-based oxide by a heat treatment step to be described below. Specifically, the lithium precursor may include at least one selected from the group consisting of lithium metal, LiOH, LiH, and Li₂CO₃, and specifically, may include lithium metal in terms of the fact that when the the particles including the silicon-based oxide and the lithium precursor are reacted, an additional oxidation is prevented. The lithium precursor may be in the form of particle, and specifically, may be lithium metal powder.

Specifically, the lithium precursor may include stabilized lithium metal powder (SLMP).

In an exemplary embodiment of the present invention, the particles including the silicon-based oxide and the lithium precursor may be solid-phase mixed. Specifically, during the mixing, the particles including the silicon-based oxide and the lithium precursor may be in a solid state, and in this case, during the formation of a negative electrode active material by a heat treatment to be described below, the void ratio and the specific surface area in the negative electrode active material may be controlled at appropriate levels, so that the volume expansion of the negative electrode active material according to charging and discharging may be preferably controlled.

In an exemplary embodiment of the present invention, the weight ratio of the particles including the silicon-based oxide and the lithium precursor may be 80 : 20 to 94 : 6. Specifically, the weight ratio may be 85 : 15 to 93 : 7, 88 : 12 to 93 : 7 or 90 : 10 to 92 : 8.

In an exemplary embodiment of the present invention, the particles including the silicon-based oxide and the lithium precursor may be mixed while being heat-treated under an inert gas atmosphere.

The heat treatment temperature of the mixture of the particles including the silicon-based oxide and the lithium precursor may be 650°C to 950°C, specifically 670°C to 900°C or 700°C to 850°C. When the particles including the silicon-based oxide and the lithium precursor may be mixed while being heat-treated under the aforementioned conditions, it is preferred in terms of the fact that the crystalline lithium silicate of Li₂SiO₃ is easily developed.

By a heat treatment process in the above temperature range, the Li compound may be included at an appropriate level in the prepared silicon-based particles, and specifically, the Li compound may be distributed on the surface, inside or on the surface and inside of the silicon-based particles. The silicon-based particles include a lithium silicate as the above-described Li compound, and may further include a Li silicide, a Li oxide, or the like.

By a heat treatment process in the above temperature range, the above-described negative electrode active material can be prepared. Specifically, the lithium may be distributed in the form of lithium silicate in the particles by a heat treatment process in the above temperature range, and accordingly, the lithium may serve to improve the initial efficiency and charge/discharge efficiency of the negative electrode active material by removing the irreversible capacity of the particles including the silicon-based oxide. Specifically, the lithium may be present in the form of at least one crystalline lithium silicate selected from the group consisting of crystalline Li₂SiO₃, crystalline Li₄SiO₄ and crystalline Li₂Si₂O₅ or amorphous lithium silicate. In this case, in the negative electrode active material prepared from the method for preparing a negative electrode active material of the present invention, a content of the crystalline Li₂SiO₃ may be higher than the sum of a content of the crystalline Li₂Si₂O₅ and a content of the crystalline Li₄SiO₄, and the crystalline Li₂SiO₃ may be included in an amount of 60 parts by weight or more based on total 100 parts by weight of crystalline lithium silicate.

The total content of the crystalline phase present in the silicon-based particles may be higher than the total content of the amorphous phase by a heat treatment process in the above temperature range, and accordingly, since the contents of lithium oxides and lithium silicates reacting with moisture are low, it is possible to prevent gas generation and viscosity change of the negative electrode slurry and to improve the phase stability of a slurry including the negative electrode active material, so that the qualities of a negative electrode including the negative electrode active material and a secondary battery including the negative electrode can be improved and the charge/discharge efficiency thereof can be improved.

When the heat treatment process is performed at a temperature of less than 650°C, the content of the amorphous phase of the negative electrode active material prepared by the preparation method is increased, which may cause a problem in the processability of the aqueous slurry. When the heat treatment process is performed at a temperature more than 950°C, the content of crystalline SiO₂ is increased and crystalline SiO₂ acts as a resistor during charging and discharging, so that there occurs a problem in that charging and discharging is not facilitated and the charge/discharge capacity and efficiency deteriorate, which is not preferred.

The heat treatment may be performed for 1 hour to 12 hours, specifically 2 hours to 8 hours. When the time is within the above range, the lithium silicate may be uniformly distributed in the silicon-based particles, so that the above-described charge/discharge efficiency improving effect may be further improved.

The heat treatment may be performed in an inert atmosphere in terms of the fact that an additional oxidation of the particles including the silicon-based oxide and the lithium precursor is prevented. Specifically, the heat treatment may be performed in an inert atmosphere by at least one gas selected from the group consisting of nitrogen gas, argon gas, and helium gas.

The method for preparing a negative electrode active material of the present invention may further include performing an acid treatment after the heat-treating of the resulting mixture.

A lithium compound (lithium by-product) is provided on at least a part of the surface of the silicon-based particles formed after the heat-treating of the resulting mixture. Specifically, in the process of including the Li compound in the particles including the SiOₓ (0<x<2) (doping), a lithium compound, that is, a lithium by-product formed by unreacted lithium remains near the surface of the silicon-based particles. The lithium by-product may be a lithium silicate, Li₂O, or the like, which may increase the pH of a negative electrode slurry including the negative electrode active material and lower the viscosity to cause poor electrode conditions of the negative electrode. Accordingly, an effect of improving the quality and charge/discharge efficiency of the negative electrode may be implemented at a preferred level by performing an acid treatment process after the heat treatment process to remove lithium silicates and by-products such as Li₂O present on the surface of the negative electrode active material.

Specifically, the acid treatment may be performed by treating the heat-treated composition for forming a negative electrode active material with an aqueous acid solution including at least one acid selected from the group consisting of hydrochloric acid (HCl), sulfuric acid (H₂SO₄), nitric acid (HNO₃) and phosphoric acid (H₃PO₄), specifically, at least one acid selected from the group consisting of hydrochloric acid (HCl), sulfuric acid (H₂SO₄), and nitric acid (HNO₃) for 0.3 hour to 6 hours, specifically, 0.5 hour to 4 hours, and is preferred in terms of the fact that by-products present on the surface of the negative electrode active material can be readily removed by the process.

The pH of the aqueous acid solution at 23°C may be 3 or less, specifically 2 or less, and more specifically 1 or less in terms of the fact that by-products present on the surface of the negative electrode active material can be readily removed.

The method for preparing a negative electrode active material of the present invention may further include providing a surface layer on at least a part on the silicon-based particles formed after the heat-treating of the resulting mixture. In an example, when the acid treatment step is performed after the heat-treating of the resulting mixture, the providing of the surface layer after the acid treatment step may be further included.

The surface layer may be provided by mixing the silicon-based particles and an aluminum phosphate.

Specifically, a surface layer may be formed on at least a part on the silicon-based particles by i) dry-mixing the silicon-based particles and an aluminum phosphate and heat-treating the resulting mixture or ii) mixing the silicon-based particles and the aluminum phosphate with a solvent, and then heat-treating the resulting mixture to react the silicon-based particles and the aluminum phosphate while vaporizing the solvent. When the surface layer is formed by the method, the surface layer may be easily formed by reacting Li by-products formed or remaining during the preparation process of silicon-based particles with an aluminum phosphate.

The aluminum phosphate may be in the form of Al_{b}P_{c}O_{d} (0<b≤10, 0<c≤10, and 0<d≤10). Specifically, the aluminum phosphate may be Al(PO₃)₃ or AlPO₄, and is not limited thereto, and a salt used in the art in order to form the surface layer may be appropriately employed.

Alternatively, a surface layer may be formed on at least a part on the silicon-based particles by iii) dry-mixing the silicon-based particles, an aluminum precursor and a phosphorus precursor and heat-treating the resulting mixture or iv) mixing the silicon-based particles, an aluminum precursor and a phosphorus precursor with a solvent, and then heat-treating the resulting mixture to react the silicon-based composite particles, the aluminum precursor and the phosphorus precursor while vaporizing the solvent. When the surface layer is formed by the method, the surface layer may be easily formed by reacting lithium by-products formed during the preparation process of silicon-based composite particles with an aluminum precursor and a phosphorus precursor.

The aluminum precursor may be an aluminum oxide in the form of AlₐO_{b} (0<a≤10, 0<b≤10), and may be specifically Al₂O₃.

Alternatively, the aluminum precursor may be aluminum hydroxide, aluminum nitrate, aluminum sulfate, or the like, and may be specifically Al(OH)₃, Al(NO₃)₃·9H₂0 or Al₂(SO₄)₃, and is not limited thereto, and an aluminum precursor used in the art in order to form the surface layer may be appropriately employed.

The phosphorus precursor may be a phosphorus oxide in the form of P_{c}O_{d} (0<c≤10, 0<d≤10).

Alternatively, the phosphorus precursor may be ammonium phosphate, ammonium phosphate dibasic, phosphoric acid, or the like, and may be specifically (NH₄)₃PO₄, (NH₄)₂HPO₄, H₃PO₄ or NH₄H₂PO₄, and is not limited thereto, and a phosphorus precursor used in the art in order to form the surface layer may be appropriately employed.

Alternatively, a surface layer may be formed on at least a part on the silicon-based particles by v) dry-mixing the silicon-based particles and a Li-Al-P-O-based precursor and heat-treating the resulting mixture or vi) mixing the silicon-based composite particles and a Li-Al-P-O-based precursor with a solvent, and then heat-treating the resulting mixture to react the silicon-based composite particles and the Li-Al-P-O-based precursor while vaporizing the solvent. When the surface layer is formed by the method, the surface layer may be formed by directly introducing a Li-Al-P-O-based precursor.

The Li-Al-P-O-based precursor may be in the form of Li_{y}Al_{z}P_{w}Oᵥ (0<y≤10, 0<z≤10, 0<w≤10, and 0<v≤10). Specifically, the Li-Al-P-O-based precursor may be a mixture or compound complexly formed from Li₃PO₄, AlPO₄, Al(PO₃)₃, LiAlO₂, or the like, and is not limited thereto, and a configuration used in the art in order to form the surface layer may be appropriately employed.

In the providing of the surface layer on at least a part on the silicon-based particles, the heat treatment may be performed at 500°C to 700°C, specifically 550°C to 650°C. However, the heat treatment temperature is not limited thereto, and may vary according to the salt, precursor, or the like used.

When the heat treatment temperature satisfies the above range, the salt or precursor reacts well with Li by-products to allow the surface layer to include Li, so that there is an effect that the discharging rate-limiting characteristics (rate capability) become excellent because the durability of the formed negative electrode active material to moisture is enhanced, the entry and exit of Li ions through the surface layer is facilitated and the Li diffusion resistance of the negative electrode active material surface is lowered.

The solvent may be water or ethanol and is not limited thereto, and a solvent used in the art may be appropriately employed.

The surface layer formed on the silicon-based composite particles preferably includes a Li_{y}Al_{z}P_{w}Oᵥ (0<y≤10, 0<z≤10, 0<w≤10, and 0<v≤10) phase, and the Li_{y}Al_{z}P_{w}Oᵥ phase may be an amorphous phase.

### <Negative electrode>

The negative electrode according to an exemplary embodiment of the present invention may include the above-described negative electrode active material.

Specifically, the negative electrode may include a negative electrode current collector and a negative electrode active material layer disposed on the negative electrode current collector. The negative electrode active material layer may include the negative electrode active material. Furthermore, the negative electrode active material layer may further include a binder, a thickener and/or a conductive material.

The negative electrode active material layer may be formed by applying a negative electrode slurry including a negative electrode active material, a binder, a thickener and/or a conductive material to at least one surface of a current collector and drying and rolling the current collector.

The negative electrode slurry may further include an additional negative electrode active material.

As the additional negative electrode active material, a compound capable of reversible intercalation and deintercalation of lithium may be used. Specific examples thereof include a carbonaceous material such as artificial graphite, natural graphite, graphized carbon fiber, and amorphous carbon; a metallic substance alloyable with lithium such as Si, Al, Sn, Pb, Zn, Bi, In, Mg, Ga, Cd, a Si alloy, a Sn alloy, or an Al alloy; a metal oxide which may be undoped and doped with lithium such as SiO_{β} (0 < β < 2), SnO₂, vanadium oxide, lithium titanium oxide, and lithium vanadium oxide; or a composite including the metallic substance and the carbonaceous material such as a Si-C composite or a Sn-C composite, and the like, and any one thereof or a mixture of two or more thereof may be used. Furthermore, a metallic lithium thin film may be used as the negative electrode active material. Alternatively, both low crystalline carbon and high crystalline carbon, and the like may be used as the carbon material. Typical examples of the low crystalline carbon include soft carbon and hard carbon, and typical examples of the high crystalline carbon include irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature fired carbon such as petroleum or coal tar pitch derived cokes.

The additional negative electrode active material may be a carbon-based negative electrode active material.

In an exemplary embodiment of the present invention, a weight ratio of the negative electrode active material and the additional negative electrode active material included in the negative electrode slurry may be 10:90 to 90:10, specifically 10:90 to 50:50.

The negative electrode slurry may include a solvent for forming a negative electrode slurry. Specifically, the solvent for forming a negative electrode slurry may include at least one selected from the group consisting of distilled water, ethanol, methanol, and isopropyl alcohol, specifically distilled water in terms of facilitating the dispersion of the components.

A negative electrode slurry including the negative electrode active material according to an exemplary embodiment of the present invention may have a pH of 7 to 11 at 25°C. When the pH of the negative electrode slurry satisfies the above range, there is an effect that the rheological properties of the slurry are stabilized. In contrast, when the pH of the negative electrode slurry is less than 7 or exceeds 11, there is a problem in that carboxymethyl cellulose (CMC) used as a thickener is decomposed, resulting in a decrease in the viscosity of the slurry and a deterioration in the degree of dispersion of the active material included in the slurry.

The negative electrode current collector is sufficient as long as the negative electrode current collector has conductivity without causing a chemical change to the battery, and is not particularly limited.

For example, as the current collector, it is possible to use copper, stainless steel, aluminum, nickel, titanium, fired carbon, or a material in which aluminum or stainless steel whose surface is surface-treated with carbon, nickel, titanium, silver, and the like. Specifically, a transition metal, such as copper or nickel which adsorbs carbon well, may be used as a current collector. Although the current collector may have a thickness of 6 um to 20 µm, the thickness of the current collector is not limited thereto.

The binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene-butadiene rubber (SBR), fluorine rubber, polyacrylic acid and a material in which the hydrogen thereof is substituted with Li, Na, Ca, or the like, and may also include various copolymers thereof.

The conductive material is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a metal powder such as a carbon fluoride powder, an aluminum powder, and a nickel powder; a conductive whisker such as zinc oxide and potassium titanate; a conductive metal oxide such as titanium oxide; a conductive material such as polyphenylene derivatives, and the like.

The thickener may be carboxymethyl cellulose (CMC) and is not limited thereto, and a thickener used in the art may be appropriately employed.

In an exemplary embodiment of the present invention, a weight ratio of the negative electrode active material and the additional negative electrode active material included in the negative electrode slurry may be 1:99 to 30:70, specifically 5:95 to 30:70 or 10:90 to 20:80.

In an exemplary embodiment of the present invention, the entire negative electrode active material may be included in the negative electrode slurry in an amount of 60 parts by weight to 99 parts by weight, specifically 70 parts by weight to 98 parts by weight, based on total 100 parts by weight of the solid content of the negative electrode slurry.

In an exemplary embodiment of the present invention, the binder may be included in an amount of 0.5 parts by weight to 30 parts by weight, specifically 1 part by weight to 20 parts by weight, based on total 100 parts by weight of the solid content of the negative electrode slurry.

In an exemplary embodiment of the present invention, the conductive material may be included in an amount of 0.5 parts by weight to 25 parts by weight, specifically 1 part by weight to 20 parts by weight, based on total 100 parts by weight of the solid content of the negative electrode slurry.

In an exemplary embodiment of the present invention, the thickener may be included in an amount of 0.5 parts by weight to 25 parts by weight, specifically 0.5 parts by weight to 20 parts by weight, and more preferably 1 part by weight to 20 parts by weight based on total 100 parts by weight of the solid content of the negative electrode slurry.

The negative electrode slurry according to an exemplary embodiment of the present invention may further include a solvent for forming a negative electrode slurry. Specifically, the solvent for forming a negative electrode slurry may include at least one selected from the group consisting of distilled water, ethanol, methanol, and isopropyl alcohol, specifically distilled water in terms of facilitating the dispersion of the components.

In an exemplary embodiment of the present invention, the solid content weight of the negative electrode slurry may be 20 parts by weight to 75 parts by weight, specifically 30 parts by weight to 70 parts by weight, based on total 100 parts by weight of the negative electrode slurry.

### <Secondary battery>

A secondary battery according to an exemplary embodiment of the present invention may include the above-described negative electrode according to an exemplary embodiment. Specifically, the secondary battery may include a negative electrode, a positive electrode, a separator interposed between the positive electrode and the negative electrode, and an electrolyte, and the negative electrode is the same as the above-described negative electrode. Since the negative electrode has been previously described, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Further, the positive electrode current collector may typically have a thickness of 3 to 500 um, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1l+c1}Mn_{2-c1}O₄ (0≤c1≤0.33), LiMnO₂, LiMn₂O₃, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1-c2}M_{c2}O₂ (here, M is at least one selected from the group consisting of Co, Mn, Al, Cu, Fe, Mg, B and Ga, and c2 satisfies 0.01≤c2≤0.5); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change in a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates such as ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte solution, and for example, as an anion of the lithium salt, it is possible to use one or more selected from the group consisting of F-, Cl-, I-, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

According to still another exemplary embodiment of the present invention, provided are a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

### Mode for Carrying out the Invention

### <Examples and Comparative Examples>

### Example 1

100 g of a powder in which Si and SiO₂ were mixed at a molar ratio of 1:1 was heated under vacuum at a sublimation temperature of 1,400°C in a reactor. Thereafter, a mixed gas of the vaporized Si and SiO₂ was reacted in a cooling zone in a vacuum state having a cooling temperature of 800°C and condensed into a solid phase. Thereafter, preliminary silicon-based particles were prepared by performing a heat treatment at a temperature of 800°C in an inert atmosphere. Thereafter, after 15 sus ball media were introduced into the preliminary silicon-based particles, silicon-based particles having a size of (D₅₀) = 6 um were prepared by pulverizing the preliminary silicon-based particles using a ball mill for 3 hours. Thereafter, the silicon-based particles were positioned in a hot zone of a CVD apparatus while maintaining an inert atmosphere by flowing Ar gas, and the methane was blown into the hot zone at 900°C using Ar as a carrier gas and reacted at 10⁻¹ torr for 20 minutes to form a carbon layer on the surface of the silicon-based particles.

A composition for forming a negative electrode active material was prepared by solid-phase mixing of the silicon-based particles on which the carbon layer was formed and lithium metal powder as a lithium precursor at a weight ratio of 90:10.

The composition for forming a negative electrode active material was heat-treated at 800°C for 3 hours.

The heat-treated composition for forming a negative electrode active material was acid-treated with an aqueous hydrochloric acid solution having a pH of 1 at 23°C for 1 hour.

A material obtained by the acid treatment was used as a negative electrode active material of Example 1. The negative electrode active material had a D₅₀ of 6 um and a specific surface area of 3 m²/g.

### Example 2

A negative electrode active material was prepared in the same manner as in Example 1, except that a composition for forming a negative electrode active material was prepared by solid-phase mixing of the silicon-based particles on which the carbon layer was formed and lithium metal powder as a lithium precursor at a weight ratio of 92:8.

### Example 3

A negative electrode active material was prepared in the same manner as in Example 1, except that a composition for forming a negative electrode active material was prepared by solid-phase mixing of the silicon-based particles on which the carbon layer was formed and lithium metal powder as a lithium precursor at a weight ratio of 90:10, and the acid treatment was not performed.

### Example 4

A negative electrode active material was prepared in the same manner as in Example 1, except that a composition for forming a negative electrode active material was prepared by solid-phase mixing of the silicon-based particles on which the carbon layer was formed and lithium metal powder as a lithium precursor at a weight ratio of 90:10, and the composition for forming a negative electrode active material was heat-treated at 850°C for 3 hours.

### Example 5

A surface layer including Li, Al, P and O on the surface was formed by mixing 1.5 g of Al(PO₃)₃ with 98.5 g of the negative electrode active material obtained in Example 1, and then heat-treating the resulting mixture at 600°C, and a material with the surface layer formed was used as a negative electrode active material of Example 5.

### Example 6

A negative electrode active material was prepared in the same manner as in Example 1, except that silicon-based particles having a size of (D₅₀) = 8 um were prepared by pulverizing the preliminary silicon-based particles.

### Comparative Example 1

A negative electrode active material was prepared in the same manner as in Example 1, except that the composition for forming a negative electrode active material was heat-treated at 500°C for 3 hours, and the acid treatment was not performed.

### Comparative Example 2

A negative electrode active material was prepared in the same manner as in Example 1, except that the composition for forming a negative electrode active material was heat-treated at 1000°C for 3 hours, and the acid treatment was not performed.

### Comparative Example 3

A negative electrode active material was prepared in the same manner as in Example 1, except that the composition for forming a negative electrode active material was heat-treated at 1000°C for 3 hours, and the acid treatment was performed for 3 hours.

### Comparative Example 4

A negative electrode active material was prepared in the same manner as in Example 1, except that a composition for forming a negative electrode active material was prepared by solid-phase mixing of the silicon-based oxide particles on which the carbon layer was formed and lithium metal powder as a lithium precursor at a weight ratio of 94:6, the composition for forming a negative electrode active material was heat-treated at 500°C for 3 hours, and the acid treatment was not performed.

### Comparative Example 5

A negative electrode active material was prepared in the same manner as in Example 1, except that a composition for forming a negative electrode active material was prepared by solid-phase mixing of the silicon-based oxide particles on which the carbon layer was formed and lithium metal powder as a lithium precursor at a weight ratio of 94:6, the composition for forming a negative electrode active material was heat-treated at 1000°C for 3 hours, and the acid treatment was performed for 3 hours.

### Comparative Example 6

A negative electrode active material was prepared in the same manner as in Example 1, except that silicon-based particles having a size of (D₅₀) = 15 um were prepared by pulverizing the preliminary silicon-based particles.

The negative electrode active materials prepared in Examples 1 to 6 and Comparative Examples 1 to 6 were analyzed by the following methods, and the analysis results are shown in Table 1.

### <Measurement of p2/pl>

In Table 1, p2/p1 was calculated by ²⁹Si MAS NMR analysis as follows.
- p2/p1: ratio of the height of the peak (p2) of Li₂Si₂O₅ to the height of the peak (p1) of Li₂SiO₃ during ²⁹Si MAS NMR analysis

### <Measurement of total content of crystalline phase including crystalline Li₂Si₂O₅, crystalline Li₂SiO₃, crystalline Li₄SiO₄, crystalline SiO₂, and crystalline Si and total content of amorphous phase>

Measurement was made using an Xray diffraction (XRD) device (trade name: D4-endavor, manufacturer: Bruker). For the type and wavelength of a light source, an X-ray wavelength generated by CuKα was used, and the wavelength (λ) of the light source was 0.15406 nm. After a reference material MgO and the negative electrode active material were mixed at a weight ratio of 20:80, the resulting mixture was put into a cylindrical holder with a diameter of 2.5 cm and a height of 2.5 mm, and flattening work was performed using a slide glass such that the height of a sample in the holder was constant to prepare a sample for XRD analysis. SCANTIME was set to 1 hour and 15 minutes, a measurement region was set to a region where 20 was 10° to 90°, and STEP TIME and STEP SIZE were set so as to scan 20 by 0.02° per second. The measurement results were analyzed for X-ray diffraction profiles by Rietveld refinement using an X-ray diffraction pattern analysis software. The total content of crystalline phase including crystalline Li₂Si₂O₅, crystalline Li₂SiO₃, crystalline Li₄SiO₄, crystalline SiO₂, and crystalline Si and the total content of the amorphous phase were measured by the analysis.

**[Table 1]**

| | Based on 100 parts by weight of negative electrode active material | Based on total 100 parts by weight of silicon-based particles (Li-SiOx) | | | | | | |
|---|---|---|---|---|---|---|---|---|
| | Li content (parts by weight) | crystalline Li₂SiO₃ | crystalline Li₂Si₂O₅ | p2/p1 | Crystalline SiO₂ | Crystalline Si | Crystalline phase total content (parts by weight) | Amorphou s phase total content (parts by weight) |
| | | Content (parts by weight) | Content (parts by weight) | | Content (parts by weight) | Content (parts by weight) | | |
| Example 1 | 9 | 40 | 5 | 0.2 | 0 | 20 | 65 | 35 |
| Example 2 | 7.5 | 33 | 10 | 0.6 | 0 | 20 | 63 | 37 |
| Example 3 | 9.7 | 45 | 5 | 0.15 | 0 | 20 | 70 | 30 |
| Example 4 | 9 | 43 | 15 | 0.4 | 0 | 25 | 83 | 17 |
| Example 5 | 9 | 40 | 5 | 0.2 | 0 | 20 | 65 | 35 |
| Example 6 | 8.7 | 40 | 7 | 0.2 | 0 | 20 | 67 | 33 |
| Comparative Example 1 | 9.7 | 17 | 3 | 0.2 | 0 | 20 | 40 | 60 |
| Comparative Example 2 | 9.7 | 30 | 35 | 1.2 | 5 | 26 | 96 | 4 |
| Comparative Example 3 | 8.5 | 10 | 35 | 1.4 | 8 | 26 | 79 | 21 |
| Comparative Example 4 | 6 | 10 | 1 | 0.3 | 0 | 15 | 26 | 74 |
| Comparative Example 5 | 5.2 | 3 | 20 | 1.5 | 8 | 15 | 46 | 54 |
| Comparative Example 6 | 8.5 | 35 | 25 | 0.15 | 0 | 20 | 80 | 20 |

| | | | | | | | | |
|---|---|---|---|---|---|---|---|---|
| - The negative electrode active materials of Examples 1 to 6 and Comparative Examples 1 to 6 do not include crystalline Li₄SiO₄ | | | | | | | | |

The D₅₀ of the negative electrode active material was analyzed by a PSD measurement method using a Microtrac apparatus.

The specific surface area of the negative electrode active material was measured by degassing gas at 200°C for 8 hours using a BET measuring apparatus (BEL-SORP-MAX, Nippon Bell), and performing N₂ adsorption/desorption at 77 K.

### Experimental Example: Evaluation of discharge capacity, initial efficiency, and service life (capacity retention rate) characteristics

Negative electrodes and batteries were prepared using the negative electrode active materials in the Examples and the Comparative Examples, respectively.

A mixture was prepared by mixing the negative electrode active material, a conductive material carbon black, and a binder polyacrylic acid (PAA) at a weight ratio of 80:10:10. Thereafter, 7.8 g of distilled water was added to 5 g of the mixture, and then the resulting mixture was stirred to prepare a negative electrode slurry. The negative electrode slurry was applied to a copper (Cu) metal thin film which is a negative electrode current collector having a thickness of 20 µm and dried. In this case, the temperature of the circulating air was 60°C. Subsequently, a negative electrode was prepared by roll pressing the negative electrode current collector and drying the negative electrode current collector in a vacuum oven at 130°C for 12 hours.

A lithium (Li) metal thin film obtained by cutting a lithium (Li) metal sheet into a circle of 1.7671 cm² was used as a positive electrode. A porous polyethylene separator was interposed between the positive electrode and the negative electrode, vinylene carbonate was dissolved in 0.5 parts by weight in a mixed solution of methyl ethyl carbonate (EMC) and ethylene carbonate (EC) at a mixed volume ratio of 7 : 3, and an electrolyte solution in which LiPF₆ having a concentration of 1 M was dissolved was injected thereinto to prepare a lithium coin half-cell.

The discharge capacity, initial efficiency, and capacity retention rate were evaluated by charging and discharging the prepared battery, and are shown in the following Table 2.

For the 1st and 2nd cycles, the battery was charged and discharged at 0.1 C, and from the 3rd cycle to the 49th cycle, the battery was charged and discharged at 0.5 C. The 50th cycle was completed in a charged state (with lithium contained in the negative electrode).
Charging conditions: CC (constant current)/CV (constant voltage) (5 mV/0.005 C current cut-off)
Discharging conditions: CC (constant current) conditions 1.5 V

The discharge capacity (mAh/g) and initial efficiency (%) were derived from the results during one-time charge/discharge. Specifically, the initial efficiency (%) was derived by the following calculation. Initial efficiency (%) = (1st discharge capacity / 1st charge capacity) × 100

The capacity retention rate was each derived by the following calculation. Capacity retention rate (%) = (49th discharge capacity / 1st charge capacity) × 100

**[Table 2]**

| | Discharge capacity (mAh/g) | Initial efficiency (%) | Capacity retention rate (%) |
|---|---|---|---|
| Example 1 | 1350 | 91 | 50 |
| Example 2 | 1400 | 87.5 | 47 |
| Example 3 | 1300 | 90 | 49 |
| Example 4 | 1300 | 89 | 48 |
| Example 5 | 1350 | 91 | 52 |
| Example 6 | 1350 | 90 | 50 |
| Comparative Example 1 | 1270 | 88 | 30 |
| Comparative Example 2 | 1250 | 88 | 33 |
| Comparative Example 3 | 1290 | 88 | 30 |
| Comparative Example 4 | 1450 | 80 | 25 |
| Comparative Example 5 | 1470 | 78 | 20 |
| Comparative Example 6 | 1300 | 89 | 25 |

In Table 2, it can be confirmed that in Examples 1 to 6 using the negative electrode active material according to the present invention, the content of the crystalline Li₂SiO₃ is high, the loss of discharge capacity per weight depending on an increase in Li content in the negative electrode active material is small, the total content of the crystalline phase present in the negative electrode active material is higher than the total content of the amorphous phase, and thus, the phase stability of the slurry is improved, and the initial efficiency and service life characteristics are significantly increased due to a lithium silicate structure of electrochemically stable Li₂SiO₃.

In the case of Example 5, it can be confirmed that a surface layer including Li, Al, P and O is provided on the surface of the negative electrode active material, so that a Li compound included in the silicon-based particles may react with the moisture of a slurry to prevent a phenomenon of lowering the viscosity of the slurry, and thus, the initial efficiency and service life characteristics are further improved.

In contrast, in Comparative Examples 1 to 6, it can be confirmed that the loss of capacity per weight is increased or the structure of Li₂Si₂O₅ is unstable because the crystalline Li₂SiO₃ is included in an amount less than 60 parts by weight on total 100 parts by weight of crystalline lithium silicate or the total content of the crystalline phase is low, and thus, the initial efficiency and/or service life characteristics are poor. In particular, in the case of Comparative Examples 4 and 5, it can be confirmed that Li content is reduced, and thus, the discharge capacity is increased, but the efficiency is reduced by 10% or more, and the service life is reduced by about 50% or more.

## Claims

1. A negative electrode active material comprising silicon-based particles comprising SiOₓ, wherein 0<x<2, and a Li compound,
wherein the Li compound comprises at least one crystalline lithium silicate selected from the group consisting of crystalline Li₂SiO₃, crystalline Li₄SiO₄ and crystalline Li₂Si₂O₅,
a content of the crystalline Li₂SiO₃ is higher than the sum of a content of the crystalline Li₂Si₂O₅ and a content of the crystalline Li₄SiO₄,
the crystalline Li₂SiO₃ is included in an amount of 60 parts by weight or more based on total 100 parts by weight of crystalline lithium silicate, and
a total content of the crystalline phase present in the silicon-based particles is higher than a total content of the amorphous phase.

2. The negative electrode active material of claim 1, wherein a Li element is comprised in an amount of more than 7 parts by weight and 10 parts by weight or less based on total 100 parts by weight of the negative electrode active material.

3. The negative electrode active material of claim 1, wherein the Li compound comprises crystalline Li₂SiO₃ and crystalline Li₂Si₂O₅.

4. The negative electrode active material of claim 1, wherein the total content of the crystalline phase present in the silicon-based particles is more than 50 parts by weight and 85 parts by weight or less based on total 100 parts by weight of the silicon-based particles.

5. The negative electrode active material of claim 1, wherein the crystalline Li₂SiO₃ is comprised in an amount of 15 parts by weight or more and 50 parts by weight or less based on total 100 parts by weight of the silicon-based particles.

6. The negative electrode active material of claim 1, wherein a difference between the content of the crystalline Li₂SiO₃ and the content of the crystalline Li₂Si₂O₅ is 1 part by weight to 50 parts by weight based on total 100 parts by weight of the silicon-based particles.

7. The negative electrode active material of claim 1, wherein the crystalline Li₄SiO₄ is not comprised.

8. The negative electrode active material of claim 1, wherein during ²⁹Si-MAS-NMR analysis, the height of a peak p1 of Li₂SiO₃ that appears at a chemical shift peak of -70 ppm to -80 ppm is larger than the height of a peak p2 of Li₂Si₂O₅ that appears at a chemical shift peak of -90 ppm to -100 ppm.

9. The negative electrode active material of claim 1, wherein during ²⁹Si-MAS-NMR analysis, a ratio p2/p1 of the height of a peak p2 of Li₂Si₂O₅ that appears at a chemical shift peak of -90 ppm to -100 ppm to the height of a peak p1 of Li₂SiO₃ that appears at a chemical shift peak of -70 ppm to -80 ppm is 1 or less.

10. The negative electrode active material of claim 1, wherein a peak p3 of Li₄SiO₄ that appears at a chemical shift peak of -60 ppm to -69 ppm is not present during ²⁹Si-MAS-NMR analysis.

11. The negative electrode active material of claim 1, wherein crystalline SiO₂ is comprised in an amount of less than 5 parts by weight based on total 100 parts by weight of the silicon-based particles.

12. The negative electrode active material of claim 1, further comprising a carbon layer provided on the silicon-based particles.

13. The negative electrode active material of claim 1, further comprising a surface layer comprising Al, P and O provided on the silicon-based particles.

14. A method for preparing the negative electrode active material according to any one of claims 1 to 13, the method comprising:
forming particles comprising a silicon-based oxide represented by SiOₓ, wherein 0<x<2; and
mixing particles comprising the silicon-based oxide and a lithium precursor, and then heat-treating the resulting mixture.

15. The method of claim 14, further comprising performing an acid treatment after the heat-treating of the resulting mixture.

16. The method of claim 14, further comprising providing a surface layer on at least a part on the silicon-based particles formed after the heat-treating of the resulting mixture.

17. The method of claim 14, wherein the heat treatment is performed at 650°C to 950°C.

18. The method of claim 14, wherein the heat treatment is performed for 1 hour to 12 hours.

19. A negative electrode comprising:
a negative electrode current collector; and
a negative electrode active material layer disposed on at least one surface of the negative electrode current collector,
wherein the negative electrode active material layer comprises a negative electrode material comprising the negative electrode active material of any one of claims 1 to 13.

20. A secondary battery comprising:
the negative electrode of claim 19;
a positive electrode facing the negative electrode;
a separator interposed between the negative electrode and the positive electrode; and
an electrolyte.
